# EUROPÄISCHE PATENTANMELDUNG

(11) **EP 1 243 533 A2**
(43) Veröffentlichungstag der Anmeldung: **25.09.2002**
(21) Anmeldenummer: 02004300.6
(22) Anmeldetag: 28.02.2002
(51) Int. Cl.: B65G 51/30, B65G 51/06

(54) **Pneumatisches Beförderungssystem für Wertgegenstände**

(30) Priorität: 21.03.2001 DE 20104886 U
(71) Anmelder: C.P. Bourg S.A., B-1340 Ottignies-Louvain L.N. (BE)
(72) Erfinder: Verdonckt, André, 1341 Ottignies L.L.N. (BE)
(74) Vertreter: Degwert, Hartmut, Dipl.-Phys.

(57) **Zusammenfassung**

Das pneumatische Beförderungssystem für Wertgegenstände hat eine Ein/Übergabestation, ein pneumatisches Beförderungsrohr (52, 56) zur Verbindung der Ein/Übergabestation mit einer gesicherten Aufbewahrungsstation (58) und eine Turbine (38) zur pneumatischen Beaufschlagung des Beförderungsrohres, um Transportbehälter (40) durch das Beförderungsrohr von der Ein/Übergabestation zu der Aufbewahrungsstation zu befördern. In dem Beförderungsrohr (52, 56) zwischen der Ein/Übergabestation und der Aufbewahrungsstation (58) ist eine Rohrweiche (54) angeordnet, welche die Turbine (38) alternativ mit dem ersten Rohrabschnitt (52) zwischen Ein/Übergabestation und Rohrweiche (54) oder mit dem zweiten Rohrabschnitt (56) zwischen Aufbewahrungsstation (58) und Rohrweiche (54) verbindet. Die Turbine (38) beaufschlagt den ersten Rohrabschnitt (52) mit Unterdruck und den zweiten Rohrabschnitt (56) mit Überdruck, so daß die Beförderungsrichtungen in den an die Rohrweiche (54) angeschlossenen Enden des ersten und des zweiten Rohrabschnitts zueinander entgegengesetzt sind.

## Beschreibung

Die Erfindung betrifft ein pneumatisches Beförderungssystem für Wertgegenstände, mit einer Ein/Übergabestation, einem pneumatischen Beförderungsrohr zur Verbindung der Ein/Übergabestation mit einer gesicherten Aufbewahrungsstation und einer Turbine zur pneumatischen Beaufschlagung des Beförderungsrohres, um Transportbehälter durch das Beförderungsrohr von der Ein/Übergabestation zu der Aufbewahrungsstation zu befördern.

Pneumatische Beförderungssysteme für Wertgegenstände werden bei Banken eingesetzt, um Wertgegenstände wie Banknoten und Schecks aus einem öffentlich zugänglichen Bereich zu einem sicheren Aufbewahrungsort zu befördern. Die Übergabe der Wertgegenstände an das pneumatische Beförderungssystem erfolgt mittels Transportbehältern.

Eine besondere Anwendung derartiger pneumatischer Beförderungssysteme für Wertgegenstände sind automatisierte Ein/Übergabestationen, an denen die Bargeldeinnahmen von Geschäftsbetrieben nach Geschäftsschluß deponiert werden. Der Zugang zu den Ein/Übergabestationen kann mit einem Erkennungssystem gesichert werden, beispielsweise mit einem Kartenleser oder einem biometrischen Sensor. Da aber die Ein/Übergabestation über das Beförderungsrohr mit der Aufbewahrungsstation verbunden ist, kann die Möglichkeit eines Mißbrauchs nicht ausgeschlossen werden. Wenn an dem Transportbehälter ein Zugmittel, z.B. eine dünne Schnur, befestigt wird, kann er nach seiner Beförderung zur Aufbewahrungsstation aus dieser herausgezogen werden und dabei möglicherweise andere Gegenstände mitziehen.

Durch die Erfindung wird ein pneumatisches Beförderungssystem für Wertgegenstände geschaffen, bei dem ein solcher Mißbrauch ausgeschlossen ist.

Gemäß der Erfindung ist in dem pneumatischen Beförderungssystem der eingangs angegebenen Art in dem Beförderungsrohr zwischen der Ein/Übergabestation und der Aufbewahrungsstation eine Rohrweiche angeordnet. Diese Rohrweiche verbindet die Turbine alternativ mit dem ersten Rohrabschnitt zwischen der Ein/Übergabestation und der Rohrweiche oder mit dem zweiten Rohrabschnitt zwischen der Aufbewahrungsstation und der Rohrweiche. Den ersten Rohrabschnitt beaufschlagt die Turbine mit Unterdruck, den zweiten Rohrabschnitt hingegen mit Überdruck. Nachdem ein Transportbehälter durch Unterdruck von der Ein/Übergabestation zur Rohrweiche und eventuell durch diese hindurch befördert worden ist, wird die Rohrweiche in ihre Stellung umgeschaltet, in welcher sie die Turbine mit dem zur Aufbewahrungsstation führenden Rohrabschnitt verbindet. Gleichzeitig wird die Turbine auf Überdruck umgeschaltet. In diesem Zustand ist die Verbindung mit der Aufbewahrungsstation unterbrochen. Der Transportbehälter wird ohne jede Möglichkeit der Rückbewegung zur Aufbewahrungsstation befördert.

Für die Beförderung von flachen Wertgegenständen wie Banknotnen, Schecks und dergleichen werden vorzugsweise taschen- oder tütenförmige Transportbehälter aus flexiblem Material, insbesondere einer Kunststoffolie verwendet. Derartige Transportbehälter sind zur Beförderung in einem pneumatischen Beförderungsrohr mit angesetzten Transportsegeln ausgestattet, die durch pneumatische Beaufschlagung aufgebläht werden. Die derzeit verfügbaren Transportbehälter dieser Art sind jedoch nur an einem Ende mit Transportsegeln ausgestattet und können daher nur in einer Richtung befördert werden. Durch die Erfindung wird daher auch ein Transportbehälter für die Beförderung flacher Wertgegenstände wie Banknoten, Schecks und dergleichen in einem pneumatischen Beförderungsrohr zur Verfügung gestellt. Der erfindungsgemäße Transportbehälter hat die Form einer flachen Tasche oder Tüte und ist dadurch gekennzeichnet, daß die flache Tasche, bezogen auf ihre Transportrichtung in dem Beförderungsrohr, ein vorderes und ein hinteres Ende aufweist und daß sowohl an dem vorderen als auch an dem hinteren Ende ein sich unter pneumatischer Beaufschlagung in dem Beförderungsrohr aufblähendes Transportsegel angebracht ist. Beide Transportsegel sprechen sowohl auf Überdruck als auch auf Unterdruck an, so daß der Transportbehälter in einem pneumatischen Beförderungsrohr in der einen oder anderen Richtung bewegt wird, je nachdem, ob das Beföderungsrohr mit Überdruck oder Unterdruck beaufschlagt wird. Durch die Symmetrie des Transportbehälters ergibt sich im übrigen auch der Vorteil, daß er beliebig mit dem einen oder anderen Ende in die Ein/Übergabestation eingeführt werden kann. In seiner bevorzugten Ausgestaltung hat der Transportbehälter ferner an jedem Ende zwei Transportsegel auf den beiden einander gegenüberliegenden Flachseiten, so daß er in beliebiger Orientierung übergeben werden kann.

In dem erfindungsgemäßen Beförderungssystem für Wertgegenstände ist vorzugsweise ein Zugangs-Kontrollsystem integriert. Alternativ oder zusätzlich ist die Ein/Übergabestation durch einen Code-Leser gesichert, der einen am Transportbehälter angebrachten Code auswertet.

Weitere Merkmale und Vorteile der Erfindung ergeben sich aus der folgenden Beschreibung einer bevorzugten Ausführungsform und aus den beigefügten Zeichnungen, auf die Bezug genommen wird. In den Zeichnungen zeigen:
- Figur 1 schematisch eine Schnittansicht einer Ein/Übergabe station des Beförderungssystems;
- Figur 2 eine Funktionsdarstellung des Beförderungssystems in einem ersten Betriebszustand;
- Figur 3 das Beförderungssystem in einem zweiten Betriebszustand; und
- Figur 4 schematisch einen erfindungsgemäßen Transportbehälter.

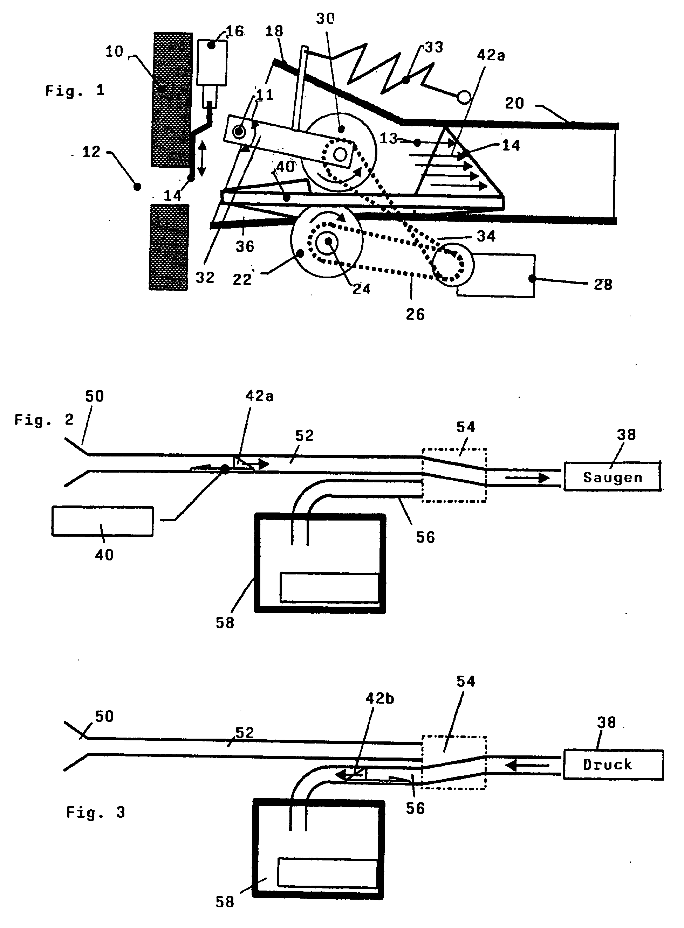

Die in Figur 1 gezeigte Ein/Übergabestation des pneumatischen Beförderungssystems für Wertgegenstände ist hinter einer Gebäudewand 10 im Inneren eines Gebäudes angeordnet. Die Gebäudewand 10 hat eine Öffnung 12, die durch eine verschiebbare Klappe 14 verschließbar ist. Die Klappe 14 wird durch einen Antrieb 16 in senkrechter Richtung zwischen einer Schließstellung und einer Öffnungsstellung bewegt. Innenseitig hinter der Öffnung 12 liegt ein trichterförmig erweitertes Ende 18 eines pneumatischen Beförderungsrohres 20. Am Boden der trichterförmigen Erweiterung 18 des pneumatischen Beförderungsrohres 20 befindet sich eine erste Antriebsrolle 22, die auf einer festen Achse 24 gelagert ist und über einen Treibriemen 26 von einem Antriebsmotor 28 angetrieben wird. Ein zweite Antriebsrolle 30 ist auslenkbar an einem Schwenkarm 32, der um eine feste Achse 34 schwenkbar ist, und von einer Zugfeder 33 beaufschlagt wird, oberhalb der Antriebsrolle 22 gelagert. Auch die Antriebsrolle 30 wird von dem Antriebsmotor 28 angetrieben, in diesem Falle über einen elastisch dehnbaren Treibriemen 34.

Am Boden der trichterförmigen Erweiterung 18 ist ein optischer Sensor 36 angeordnet. Dieser Sensor 36 ist mit einem (nicht gezeigten) Steuergerät verbunden, das auch die Funktionen des Antriebs 16, des Antriebsmotors 28 und einer in den Figuren 2 und 3 gezeigten Turbine 38 steuert, die das pneumatische Beförderungsrohr 20, je nach Betriebszustand des Systems, mit Druck oder Unterdruck beaufschlagt.

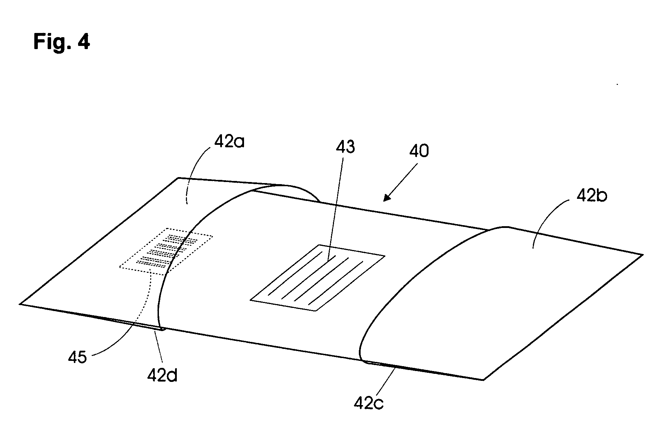

Der in Figur 4 gezeigte, allgemein taschenförmige Transportbehälter 40 ist zur Verwendung in dem erfindungsgemäßen Beförderungssystem für flache Wertgegenstände bestimmt. Er ist mit insgesamt vier symmetrisch an den Enden angeordneten Transportsegeln 42a, 42b, 42c und 42d versehen. Auf wenigstens einer seiner Hauptflächen trägt der taschenförmige Teil des Transportbehälters eine Beschriftungsfläche 43 sowie einen von autorisierter Stelle aufgebrachten Code 45, bei dem es sich um einen optischen Strichcode handelt.

Bei dem in Figur 1 gezeigten Betriebszustand ist ein Transportbehälter 40 flachliegend zwischen die Antriebsrollen 22, 30 eingeführt. Da die Antriebsrolle 30 auslenkbar ist, kann der Transportbehälter unterschiedliche Dicken aufweisen, entsprechend der Höhe des eingelegten Stapels von Banknoten oder dergleichen. Durch die Zugfeder 33 wird die Antriebsrolle 30 elastisch in Anlage an dem Transportbehälter 40 gehalten, der seinerseits gegen die Antriebsrolle 22 gedrückt wird.

Wie aus den Figuren 2 und 3 ersichtlich ist, besteht das Beförderungssystem aus der dort allgemein mit 50 bezeichneten Ein/Übergabestation, einem ersten Rohrabschnitt 52 des pneumatischen Beförderungsrohres, einer Rohrweiche 54, einem zweiten Rohrabschnitt 56, der Turbine 38 und einer Aufbewahrungsstation 58. Der erste Rohrabschnitt 52 erstreckt sich zwischen der Ein/Übergabestation 50 und einem Anschluss der Rohrweiche 54. Der zweite Rohrabschnitt 56 erstreckt sich zwischen der Aufbewahrungsstation 58 und einem zweiten Anschluß der Rohrweiche 54. Die Turbine 38 ist an den dritten Anschluß der Rohrweiche 54 angeschlossen. Die Aufbewahrungsstation 58 befindet sich in einem gesicherten Raum.

Bei dem in Figur 1 dargestellten Betriebszustand ist ein Transportgegenstand 40 durch die Öffnung 12 in der Gebäudewand 10 zwischen die Transportrollen 22, 30 eingeführt worden, nachdem er über den optischen Sensor 36 geschoben wurde. In dem (nicht gezeigten) zentralen Steuergerät wird der mittels des Sensors 36 am Transportbehälter 40 ausgelesene optische Strichcode ausgewertet. Bei zulässigem Code werden der Antrieb 28 und die Turbine 38 aktiviert. In dieser ersten Betriebsphase beaufschlagt die Turbine 38 den Rohrabschnitt 52 über die Rohrweiche 54 mit Unterdruck. Durch die angesaugte Luft, in Figur 1 durch Pfeile symbolisiert, bläht sich eines der Transportsegel 42a auf. Nachdem der Transportbehälter 40 durch die Antriebsrollen 22, 30 in den ersten Rohrabschnitt 52 des pneumatischen Beförderungsrohres 20 eingeschoben wurde, wird er durch die pneumatische Beaufschlagung mit Unterdruck weitertransportiert. Er durchfährt die Rohrweiche 54, die daraufhin in die in Figur 3 gezeigt Stellung umgeschaltet wird. Gleichzeitig wird die Turbine 38 auf Überdruck umgeschaltet. Dadurch wird das gegenüberliegende Transportsegel 42b des Transportbehälters 40 aufgebläht. Der Transportbehälter 40 durchfährt die Rohrweiche 54 in umgekehrter Transportrichtung und wird durch den zweiten Rohrabschnitt 56 zur Aufbewahrungsstation 58 befördert. In dieser Stellung der Rohrweiche 54 ist der erste Rohrabschnitt 52 abgetrennt. Es besteht keinerlei direkte Verbindung zwischen der Ein/Übergabestation 50 und der Aufbewahrungsstation 58.

## Patentansprüche

1. Pneumatisches Beförderungssystem für Wertgegenstände, mit einer Ein/Übergabestation, einem pneumatischen Beförderungsrohr (52, 56) zur Verbindung der Ein/Übergabestation (50) mit einer gesicherten Aufbewahrungsstation (58) und einer Turbine (38) zur pneumatischen Beaufschlagung des Beförderungsrohres, um Transportbehälter (40) durch das Beförderungsrohr (52, 56) von der Ein/Übergabestation zu der Aufbewahrungsstation (58) zu befördern, **dadurch gekennzeichnet, dass** in dem Beförderungsrohr (52, 56) zwischen der Ein/Übergabestation und der Aufbewahrungsstation (58) eine Rohrweiche (54) angeordnet ist, welche die Turbine (38) alternativ mit dem ersten Rohrabschnitt (52) zwischen Ein/Übergabestation und Rohrweiche (54) oder mit dem zweiten Rohrabschnitt (56) zwischen Aufbewahrungsstation (58) und Rohrweiche (54) verbindet, und dass die Turbine (38) den ersten Rohrabschnitt (52) mit Unterdruck und den zweiten Rohrabschnitt (56) mit Überdruck beaufschlagt.

2. Beförderungssystem nach Anspruch 1, **dadurch gekennzeichnet, dass** die Beförderungsrichtungen in den an die Rohrweiche (54) angeschlossenen Enden des ersten (52) und des zweiten (56) Rohrabschnitts zueinander entgegengesetzt sind.

3. Beförderungssystem nach Anspruch 1 oder 2, **dadurch gekennzeichnet, dass** die Ein/Übergabestation einen allgemein trichterförmigen Rohrabschnitt (50) aufweist, an den das von der Rohrweiche abgewandte Ende des ersten Rohrabschnitts (52) angeschlossen ist.

4. Beförderungssystem nach Anspruch 3, **dadurch gekennzeichnet, dass** in dem trichterförmigen Rohrabschnitt (50) ein Antriebsrollenpaar (22, 30) angeordnet ist, zwischen die ein Transportbehälter (40) einführbar ist.

5. Beförderungssystem nach Anspruch 4, **dadurch gekennzeichnet, dass** wenigstens eine (30) der Antriebsrollen an einem auslenkbaren Arm (32) gelagert ist.

6. Beförderungssystem nach einem der Ansprüche 1 bis 5, **dadurch gekennzeichnet, dass** die Ein/Übergabestation durch ein Zugangs-Kontrollsystem gesichert ist.

7. Beförderungssystem nach einem der Ansprüche 1 bis 5, **dadurch gekennzeichnet, dass** die Ein/Übergabestation durch einen Code-Leser gesichert ist, der einen am Transportbehälter (40) angebrachten Code (43) auswertet.

8. Beförderungssystem nach einem der vorstehenden Ansprüche, **dadurch gekennzeichnet, dass** der Transportbehälter (40) durch eine flache Tasche aus flexiblem Material gebildet ist.

9. Beförderungssystem nach Anspruch 8, **dadurch gekennzeichnet, dass** die flache Tasche, bezogen auf die Transportrichtung in dem Beförderungsrohr, ein vorderes und ein hinteres Ende aufweist und dass sowohl an dem vorderen als auch an dem hinteren Ende ein sich unter pneumatischer Beaufschlagung in dem Beförderungsrohr aufblähendes Transportsegel (42a, 42b) angebracht ist.

10. Beförderungssystem nach Anspruch 9, **dadurch gekennzeichnet, dass** an jedem Ende der Tasche zwei Transportsegel (42a - 42d) auf den beiden einander gegenüberliegenden Flachseiten der Tasche angebracht sind.

11. Transportbehälter (40) für die Beförderung flacher Wertgegenstände wie Banknoten, Schecks und dgl. in einem pneumatischen Beförderungsrohr, in Form einer flachen Tasche, **dadurch gekennzeichnet, dass** die flache Tasche, bezogen auf ihre Transportrichtung in dem Beförderungsrohr, ein vorderes und ein hinteres Ende aufweist und dass sowohl an dem vorderen als auch an dem hinteren Ende ein sich unter pneumatischer Beaufschlagung in dem Beförderungsrohr aufblähendes Transportsegel (42a - 42d) angebracht ist.

12. Transportbehälter nach Anspruch 11, **dadurch gekennzeichnet, dass** an jedem Ende der Tasche zwei Transportsegel (42a - 42d) auf den beiden einander gegenüberliegenden Flachseiten der Tasche angebracht sind.

13. Transportbehälter nach Anspruch 12, **dadurch gekennzeichnet, dass** an dem Transportbehälter (40) ein Code (43) angebracht ist.

14. Transportbehälter nach Anspruch 13, **dadurch gekennzeichnet, dass** der Code ein optischer Strichcode ist.
